# EUROPEAN PATENT APPLICATION

(11) **EP 2 296 024 A1**
(43) Date of publication of application: **16.03.2011**
(21) Application number: 09766378.5
(22) Date of filing: 08.06.2009
(51) Int. Cl.: G02B 6/38

(54) **OPTICAL TRANSMISSION MEDIUM, FERRULE, OPTICAL TERMINATION CONNECTOR, OPTICAL STRUCTURE AND OPTICAL APPARATUS**

(30) Priority: 18.06.2008 JP 2008159609
(71) Applicant: Tomoegawa Co., Ltd., Tokyo 104-8335 (JP)
(72) Inventor: HASHIMOTO, Nobuhiro, Shizuoka-shi Shizuoka 421-0192 (JP)
(74) Representative: Eisenführ, Speiser & Partner
(86) International application number: PCT/JP2009/002569
(87) International publication number: WO 2009/153930

(57) **Abstract**

An optical transmission medium, a ferrule, an optical terminal connector, an optical structure, and an optical equipment have both optical terminal functions and the optical connector functions without the need to change component depending on application. The optical transmission medium has at least one end thereof that is an APC cut surface and a refractive index matching member is provided on the APC cut surface. The ferrule is **characterized in that** at least one end thereof is an APC polished surface and a refractive index matching member is provided on the APC polished surface. The optical terminal connector includes a ferrule which holds an optical transmission medium and an adapter into which the ferrule is inserted from one end thereof, at least one end of the optical transmission medium is an APC cut surface and a refractive index matching member is provided on the APC cut surface.

## Description

### BACKGROUND OF THE INVENTION

### Field of the Invention

The present invention relates to an optical transmission medium, a ferrule, an optical terminal connector, an optical structure, and an optical equipment.

### Description of Related Art

In a conventional optical fiber communication circuit, a system in which an optical signal from a transmitter is distributed using a star coupler, etc., and the signal is transmitted to multiple users, can be used. In this system, a condition in which an optical connector is not connected may occur, at a vacant port of the star coupler, in the case in which user does not connect a receiver, or the like. Under such conditions in which the optical connector is not connected, reflection-returned light by Fresnel reflection is substantial at a boundary between an end surface of the optical fiber and air, and thereby, undesirable effects often occur on the transmitter side.

The reflection-returned light under conditions in which the optical connector is not connected is controlled by connecting an optical terminator and an end surface of the optical fiber. As such an optical terminator, for example, an optical connector type nonreflective terminator, in which a front portion of an optical fiber having a given length is inserted into a smaller diameter portion of a hole of a ferrule, a tip surface thereof is polished so as to be the same as an end surface of the ferrule, transmitted light is emitted from the end surface of the optical fiber into an optical adhesive by arranging an end surface of a rear portion of the optical fiber in a larger diameter portion of a hole of the ferrule and embedding with the optical adhesive, and the emitted light is made into nonreflected light by scattering in the optical adhesive, has been proposed (see Patent Publication 1).

In addition, as an optical connector, an optical connector including an adapter and a housing which receives an optical fiber ferrule, which contacts end surfaces of opposite ferrules, can easily be inserted into the adapter by providing an elastic deformable arm portion on the housing, and increases fixation strength, has been proposed (see Patent Publication 2).

However, as described above, the optical terminator and the optical connector are different products which exhibit different functions, respectively, and they must be used depending on different applications.

Patent Publication 1 is Japanese Unexamined Patent Application Publication No. Hei06-214120. Patent Publication 2 is Japanese Unexamined Patent Application Publication No. Sho61-226715.

### SUMMARY OF THE INVENTION

The present invention was completed by considering the above problems, and objects thereof are to provide an optical transmission medium, a ferrule, an optical terminal connector, an optical structure, and an optical equipment, which have both the optical terminal function and the optical connector function without needing to be changed depending on application.

An optical transmission medium of the present invention is **characterized in that** at least one end thereof is an APC (Angled Physical Contact) cut surface and a refractive index matching member is provided on the APC cut surface, and a ferrule of the present invention is **characterized in that** the above optical transmission medium is held. In addition, an optical terminal connector of the present invention is **characterized in that** it includes a ferrule which holds an optical transmission medium and an adapter into which the ferrule is inserted from one end thereof, and that at least one end of the optical transmission medium is an APC cut surface and a refractive index matching member is provided on the APC cut surface.

According to the optical transmission medium, the ferrule and the optical terminal connector of the present invention, in the case in which another optical fiber is not connected, at least one end of the optical transmission medium is an APC cut surface, and transmitted light is prevented from reflecting in a light source direction since it is tilted against an optical axis, and moreover, transmitted light is emitted and scattered from the APC cut surface of the optical transmission medium to the refractive index matching member inside by the refractive index matching member provided on the APC cut surface of the optical transmission medium, and therefore, light can be prevented from returning by radiation on the APC cut surface of the optical transmission medium. In the meantime, in the case in which another optical fiber is connected, the optical transmission medium can be connected with the other optical transmission medium or an optical functional part without increasing connection resistance, by way of the refractive index matching member provided on the APC cut surface of the optical transmission medium.

### BRIEF DESCRIPTION OF THE DRAWINGS

Fig. 1 is a side view showing an optical fiber of the present invention.
Fig. 2 is a side sectional view showing an optical waveguide of the present invention.
Fig. 3 is a side sectional view showing a ferrule of the present invention.
Fig. 4 is a side sectional view showing a ferrule of the present invention.
Fig. 5 is a side sectional view showing an optical terminal connector of the present invention.
Fig. 6A is a side sectional view showing an optical terminal connector of the present invention in which optical terminal function is exhibited, and Fig. 6B is a side sectional view showing an optical terminal connector of the present invention in which optical connector function is exhibited.
Fig. 7 is a side sectional view showing an optical terminal connector of the present invention.
Fig. 8A is a side sectional view showing an optical terminal connector of the present invention in which optical terminal function is exhibited, and Fig. 8B is a side sectional view showing an optical terminal connector of the present invention in which optical connector function is exhibited.
Fig. 9 is a circuit diagram for a standard experiment.
Fig. 10 is a circuit diagram for an evaluating experiment.
Fig. 11 is a circuit diagram for a standard experiment.
Fig. 12 is a circuit diagram for an evaluating experiment.

### EXPLANATION OF REFERENCE SYMBOLS

1... optical fiber, 2,6,11... connection surface, 3...APC cut surface, 7,12...APC polished surface, 4...refractive index matching member, 5...optical waveguide, 8... core portion, 9... clad portion, 10a, 10b... ferrule, 13a,13b...optical terminal connector, 14a,14b...adapter, 15...optical functional part, 16...housing, 17...optical transmission medium as a connecting partner, 18... ferrule as a connecting partner, 19... connecting surface of connecting partner, 20...housing of connecting partner, 31...clamping member, 100...optical power meter, C...FC connector, C3...female type FC connector, F1,F2,F3...quartz based single-mode optical fiber, V...V-groove substrate, X...optical fiber for a standard experiment.

### DESCRIPTION OF THE PREFERRED EMBODIMENTS

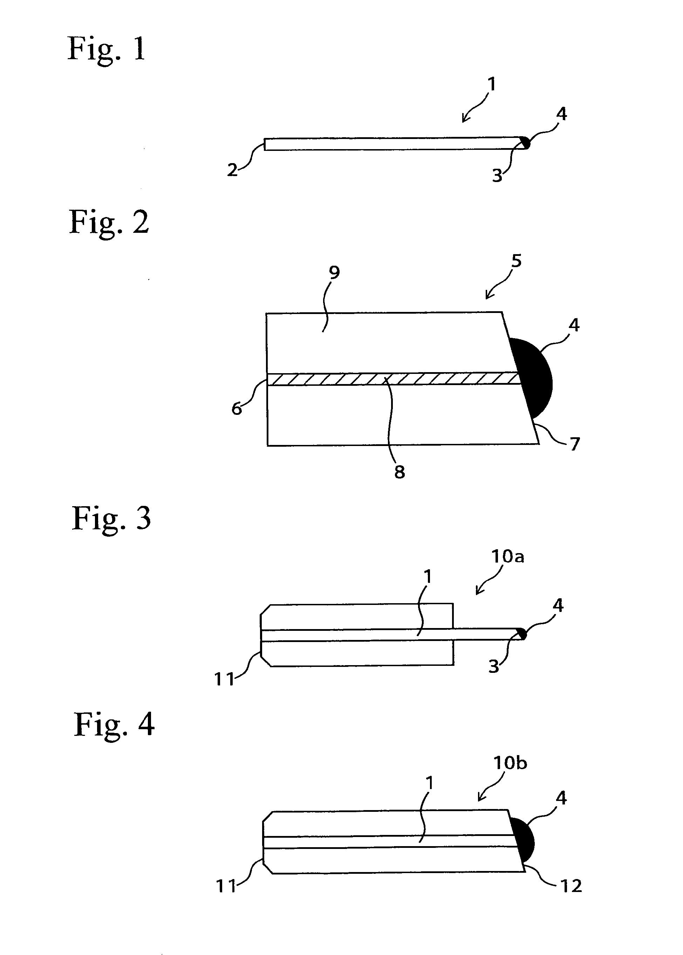

First, the optical transmission medium of the present invention will be explained using Figs. 1 and 2. Fig. 1 is a side view showing an optical fiber of the present invention, and Fig. 2 is a side view showing an optical waveguide of the present invention. Reference numeral 1 indicates an optical fiber as an optical transmission medium, reference numeral 2 indicates a connecting surface, reference numeral 3 indicates an APC cut surface, reference numeral 4 indicates a refractive index matching member, reference numeral 5 indicates an optical waveguide as an optical transmission medium, reference numeral 6 indicates a connecting surface, reference numeral 7 indicates an APC polished surface, reference numeral 8 indicates a core portion, and reference numeral 9 indicates a clad portion. As shown in Figs 1 and 2, the optical transmission media 1 and 5 of the present invention are **characterized in that** at least one end is an APC cut surface 3 or an APC polished surface 7 and a refractive index matching member 4 is provided on the APC cut surface 3 or the APC polished surface 7. The connecting surfaces 2 and 6 may be of any form, and is preferably a flat cut surface or a PC cut surface. In addition, it may be an APC cut surface depending on the connecting partner.

When the connecting surface 2 or 6 of such optical transmission media 1 and 5 is connected with an optical functional part, etc., light emitted from the optical functional part is reflected to the outside of the optical fiber by the APC cut surface 3 or the APC polished surface 7 and is terminated. In the present invention, reflection-returned light hardly exists, even if the refractive index matching member 4 is provided on the APC cut surface 3 or the APC polished surface 7. An optical structure which exhibits the optical terminal function is formed as described above.

Then, when another optical transmission medium, etc., is connected by way of the refractive index matching member 4 on the APC cut surface 3 or the APC polished surface 7 while the connecting surface 2 or 6 is connected with the optical functional part, etc., the light emitted from the optical functional part, etc., is penetrated through the APC cut surface 3 or the APC polished surface 7 and the refractive index matching member 4, and is emitted to another optical transmission medium, etc. At this time, a tip of the another optical transmission medium can be connected with the APC cut surface 3 or the APC polished surface 7 by existence of the refractive index matching member 4, without a specific adapter, even if it is any of a non-polished surface, a cut surface, and a PC cut surface. Of course, the tip of the other optical transmission medium may be an APC cut surface. As described above, the optical structure which exhibits an optical connector function is formed. Here, the connecting surface 2 or 6 of such optical transmission media 1 and 5 can be provided on various optical equipments, and it can exhibit the optical termination function or the optical connector function as necessary.

Next, a ferrule of the present invention will be explained using Fig. 3.
Fig. 3 is a side sectional view showing the ferrule of the present invention.
Reference numeral 10a indicates a ferrule. As shown in Fig. 3, the ferrule 10a of the present invention is **characterized in that** the optical transmission medium of the present invention is held. Although the connecting surface 11 may be of any form, it is preferably a flat polished surface or a PC polished surface. In addition, it may be an APC polished surface depending on a connecting partner. According to the ferrule 10a, the optical fiber of the present invention can be easily handled and the optical terminal function or the optical connector function can be exhibited as necessary.

Next, the ferrule of the present invention will be explained using Fig. 4.
Fig. 4 is a side sectional view showing the ferrule of the present invention. Reference numeral 10b indicates a ferrule. As shown in Fig. 4, the ferrule 10b of the present invention **is characterized in that** at least one end thereof is an APC polished surface 12 and refractive index matching member 4 is provided on the APC polished surface 12. Although the connecting surface 11 may be any feature, it is preferably a flat polished surface or a PC polished surface. In addition, it may be an APC polished surface depending on a connecting partner.
According to the ferrule 10b, the optical fiber of the present invention can be easily handled and the optical terminal function or the optical connector function can be exhibited as necessary.

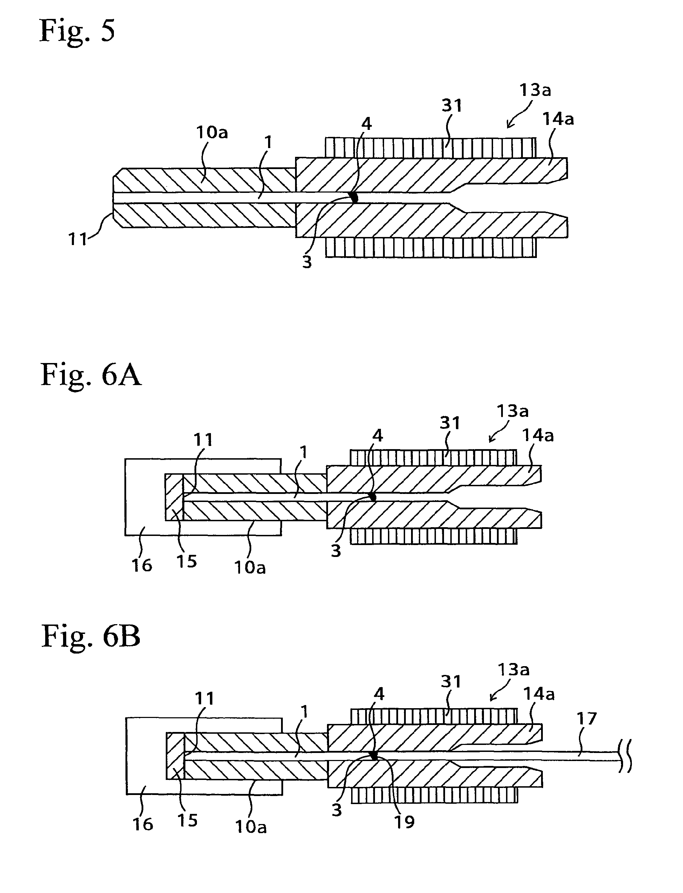

Next, the optical terminal connector of the present invention will be explained using Figs. 5 and 6. Fig. 5 is a side sectional view showing the optical terminal connector of the present invention. Reference numeral 13a indicates an optical terminal connector, reference numeral 14a indicates an adapter including a V-groove substrate, a pressing substrate, etc., and reference numeral 31 indicates a clamping member. As shown in Fig. 5, the optical terminal connector 13a of the present invention includes of the ferrule 10a in which the optical transmission medium 1 is held and the adapter 14a into which the ferrule 10a is inserted from one end thereof, and is **characterized in that** at least one end of the optical transmission medium 1 is an APC cut surface 3 and the refractive index matching member 4 is provided on the APC cut surface 3. According to the optical terminal connector 13a, the optical fiber of the present invention can be easily handled and the optical terminal function or the optical connector function can be exhibited.

Fig. 6A is a side sectional view showing an optical terminal connector of the present invention in which optical terminal function is exhibited, and Fig. 6B is a side sectional view showing an optical terminal connector of the present invention in which optical connector function is exhibited. Reference numeral 15 indicates an optical functional part, reference numeral 16 indicates a housing, reference numeral 17 indicates an optical transmission medium of a connection partner, and reference numeral 19 indicates a connecting surface of a connection partner. As shown in Fig. 6A, when the connecting surface 11 of the optical terminal connector 13 a of the present invention is connected with the optical functional part 15, the light emitted from the optical functional part 15 is reflected to the outside of the optical fiber at the APC cut surface 3 and is terminated. In the present invention, the reflection-returned light is very little, even if the refractive index matching member 4 is provided on the APC cut surface 3. The optical terminal function is exhibited as described above.

Then, as shown in Fig. 6B, when another optical transmission medium 17 to be connected, is connected by way of the refractive index matching member 4 on the APC cut surface 3 while the connecting surface 11 is connected with the optical functional part 15, the light emitted from the optical functional part 15 is penetrated through the APC cut surface 3 and the refractive index matching member 4, and is emitted to another optical transmission medium as a connecting partner. At this time, a connecting surface 19 of the another optical transmission medium 17 as a connecting partner can be connected with the APC cut surface 3 by existence of the refractive index matching member 4, without a specific adapter, even if it is any of a non-polished surface, a cut surface and a PC cut surface. Of course, the connecting surface 19 of the other optical transmission medium 17 may be an APC cut surface. As described above, the optical connector function is exhibited. According to the optical terminal connector 13a, the optical fiber of the present invention can be easily handled and the optical terminal function or the optical connector function can be exhibited as necessary.

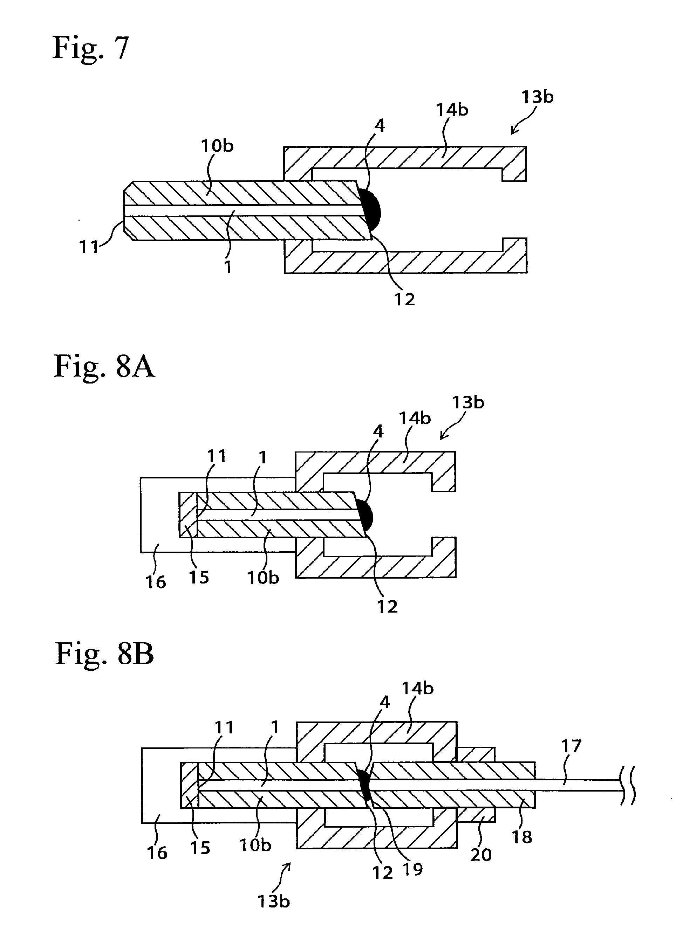

Next, the optical terminal connector of the present invention will be explained using Figs. 7 and 8. Fig. 7 is a side sectional view showing the optical terminal connector of the present invention. Reference numeral 13b indicates an optical terminal connector, and reference numeral 14b indicates an adapter. As shown in Fig. 7, the optical terminal connector 13b of the present invention includes the ferrule 10b in which the optical transmission medium 1 is held and the adapter 14b into which the ferrule 10b is inserted from one end thereof, and the ferrule 10b is **characterized in that** at least one end thereof is an APC polished surface 12 and the refractive index matching member 4 is provided on the APC polished surface 12. According to the optical terminal connector 13b, the optical fiber of the present invention can be easily handled and the optical terminal function or the optical connector function can be exhibited.

Fig. 8A is a side sectional view showing the optical terminal connector of the present invention in which optical terminal function is exhibited, and Fig. 8B is a side sectional view showing the optical terminal connector of the present invention in which optical connector function is exhibited. Reference numeral 15 indicates an optical functional part, reference numeral 16 indicates a housing, reference numeral 17 indicates an optical transmission medium of a connection partner, reference numeral 18 indicates a ferrule of a connection partner, reference numeral 19 indicates a connecting surface of a connection partner, and reference numeral 20 indicates a housing of a connection partner. As shown in Fig. 8A, when the connecting surface 11 of the optical terminal connector 13b of the present invention is connected with the optical functional part 15, the light emitted from the optical functional part 15 is reflected to the outside of the optical fiber at the APC polished surface 12 and is terminated. In the present invention, the reflection-returned light is very little, even if the refractive index matching member 4 is provided on the APC polished surface 12. The optical terminal function is exhibited as described above.

Then, as shown in Fig. 8B, when a connecting surface 19 of the ferrule in which another optical transmission medium 17 to be connected is held, is connected by way of the refractive index matching member 4 on the APC polished surface 12 while the connecting surface 11 is connected with the optical functional part 15, the light emitted from the optical functional part 15 is penetrated through the APC polished surface 12 and the refractive index matching member 4, and is emitted to the another optical transmission medium as a connecting partner. At this time, the connecting surface 19 of another optical transmission medium 17 as a connecting partner can be connected with the APC polished surface 12 by the existence of the refractive index matching member 4, without a specific adapter, even if it is any of a non-polished surface, a cut surface a flat polished surface, and a PC polished surface. Of course, the connecting surface 19 of the other optical transmission medium 17 may be an APC polished surface. As described above, the optical connector function is exhibited. According to the optical terminal connector 13b, the optical fiber of the present invention can be easily handled and the optical terminal function or the optical connector function can be exhibited as necessary.

The optical fiber used in the present invention may be made of any material such as quartz, plastic, etc., and can be suitably selected depending on application. It is necessary that at least one end of the optical fiber in the present invention be cut so as to have an APC surface, and it is preferable that the inclination be 6 to 10 degrees, and is more preferable that it be 8 degrees. According to such an end, transmitted light can be prevented from reflecting in a light source direction on a terminal surface of the optical fiber, and the reflection-returned light can be prevented from generating at the terminal surface of the optical fiber. In addition, in the present invention, various optical waveguides can also be used. Here, in the case in which the optical fiber is used with a ferrule, an APC polished surface can be formed by polishing a terminal surface of the optical fiber with the ferrule.

The refractive index matching member in the present invention is provided on the APC cut surface of the optical transmission medium and has a refractive index which is equal or close to that of the optical transmission medium, and in the case in which the optical transmission medium is connected with another optical transmission medium or an optical functional part, the optical transmission medium can be connected with an APC cut surface without a special adaptor by way of the refractive index matching member, even if it is a non-polished surface, a flat cut surface, a PC cut surface, etc. The refractive index of the refractive index matching member in the present invention is not limited to specific values as long as it is close to the refractive index of the optical transmission medium as a connecting partner; however, it is preferable that differences of the refractive indexes thereof be from 0.03 to -0.03, and it is more preferable that it be from 0.02 to -0.02, from the point of view of transmission loss due to avoidance of Fresnel reflection.

In addition, it is preferable that the refractive index matching member be adhered to an optical transmission medium by suitable tackiness, when connecting the optical transmission medium to be contacted. It is more preferable that the refractive index matching member have detachability between the optical transmission medium to be connected and an adhesive material do not adhere to the detached optical transmission medium without breaking due to aggregation. For example, a material in which type A durometer hardness by the Japanese Industrial Standard (JIS) is 80 or less, a material in which storage elastic modulus is 1×10³ MPa or more, etc., can be used. According to the refractive index matching member which includes of such material, the refractive index matching member is hardly damaged, even if burrs, etc., are at an end surface of the optical transmission medium, and the refractive index matching member is easily adhered to an end surface of the optical transmission medium by having tackiness at the surface thereof, so as to hold the optical transmission medium. Furthermore, it is not necessary to apply excessive pressure when adhering the optical transmission medium, and there is no possibility in which fracture, break, etc., of the optical transmission medium, occurs. In addition, the refractive index matching member can also be used repeatedly by having the property of being peelable multiple times, even if adhering and detaching are repeated.

As a material of the refractive index matching member, specifically, polymer materials (for example, various adhesives such as acrylic resins, epoxy resins, vinyl resins, silicone resins, rubber resins, urethane resins, methacryl resins, nylon resins, bisphenol resins, diol resins, polyimide resins, fluoroepoxy resins, fluoroacrylic resins, etc.) can be preferably used. Of these materials, silicone resins and acrylic resins are more preferable from a viewpoint of environmental resistance and adhesion. In addition, adhesive strength and wettability may be suitably adjusted by adding crosslinking agents, additives, softeners, adhesion modifiers, etc., and water resistance, moisture resistance, and heat-resistance may be added.

Furthermore, it is preferable that the refractive index matching member in the present invention be formed as a single layer. This means that there is no interface in which different materials contact inside such as a multiple layer, and does not mean that materials uniformly mixed on the order of a wavelength of light are removed. That is, the refractive index matching member has a very simple structure including of a single layer with a stickiness, and by using the member of such a single layer structure, the optical transmission medium can be connected without light reflection and low loss connection can be carried out. In addition, it is preferable that a thickness thereof be 8 to 100 µm, and it is more preferable that it be 17 to 50 µm.

As a method for providing on the APC cut surface of the optical transmission medium with the refractive index matching member in the present invention, general well-known methods can be used; however, specifically, a method in which liquid refractive index matching member is provided only on the APC cut surface by charging the optical transmission medium in a condition in which the liquid refractive index matching member is arranged in the vicinity of the APC cut surface, and then, the liquid refractive index matching member is cured until it has tackiness as described above, can be used. In this way, by providing the liquid refractive index matching member on only the APC cut surface, the refractive index matching member is prevented from going around a side surface of the optical transmission medium, and therefore, contamination in the vicinity of the APC cut surface, adhesion of dust thereby, etc., can be prevented, and moreover, high centering accuracy can be obtained when connecting with another optical transmission medium as an optical transmission medium. In this case, viscosity of the liquid refractive index matching member is not limited to a specific value; however, it is preferable that it be about 0.005 to 200 Pas. Additionally, as a method for providing with the refractive index matching member on the APC polished surface of the ferrule, a method in which a tip of the ferrule is pressed to the refractive index matching member cut so as to fit to the shape of the ferrule, can be used.

As an optical functional part, optical lenses, filters, measuring equipments, laser diodes, photodiodes, etc., can be mentioned, and these are not limited to specific types. As an optical lens, for example, optical lenses having various shapes such as a biconvex lens, a concavoconvex lens, a plano-convex lens, aspheric lens, etc., can be used, and as a filter, for example, multilayer filters, polyimide filters, etc., can be used in addition to general filters for optical communication.

In addition, the ferrule and the housing in the present invention are not limited to special features, and general well-known ferrules and housings which are used for conventional optical connectors can be used.

### EXAMPLES

### Example 1

As an optical transmission medium, an optical fiber (produced by Furukawa Electric Co., Ltd., outer diameter 0.25 µm, clad outer diameter 125 µm, length 200 mm, refractive index 1.45) was prepared. The optical fiber was peeled by removing a cover from one end thereof to the 20 mm location, and was cut at the 10 mm location from the end, so as to form an APC surface, and therefore, an APC cut surface was produced.

Next, the optical fiber was peeled by removing a cover from the other end thereof to the 20 mm location, and was cut at the 10 mm location from the end, so as to form a flat surface, and therefore, a connection surface, which is a flat cut surface, was produced.

A liquid refractive index matching member having a refractive index of 1.45 and viscosity of 0.1 Pas was prepared by adding 1.0 part of tolylene diisocyanate adduct of trimethylol propane (trade name: coronate L, produced by Nippon Polyurethane Industry Co., Ltd.) to 100 parts of 30% ethyl acetate solution of acrylic resin including of n-butyl acrylate/methyl acrylate/acrylic acid/2-hydroxyethyl methacrylate copolymer (mixing ratio = 82/15/2.7/0.3).

Then, the above optical fiber was arranged in a V-shaped groove of a holder (an optical transmission medium holding means) produced by Furukawa Electric Co. Ltd., and the liquid refractive index matching member was placed so as to be separated by 100 µm from the APC cut surface. The optical fiber was charged by an electrostatic chuck under this condition, and then, the liquid refractive index matching member was supplied only on the APC cut surface and was cured by heating at 100°C for 1.5 hours. The refractive index matching member had a thickness of 25 µm, and type A durometer hardness by JIS of 8. As described above, an optical transmission medium of Example 1 was produced.

### Example 2

As an optical transmission medium, an optical fiber (produced by Furukawa Electric Co., Ltd., outer diameter 0.25 µm, clad outer diameter 125 µm, length 200 mm, refractive index 1.45) was prepared, and it was inserted into a ferrule (produced by Pilot Precision Co., Ltd.) and was fixed by adhesive. Then, an APC polished surface was produced by polishing one end of the ferrule, so as to form an APC surface, and a connection surface which was a flat polished surface was produced by polishing the other end thereof, so as to form a flat surface.

Next, a refractive index matching member in a sheet-shaped (trade name: FITWELL, Tomoegawa Co., Ltd., refractive index 1.45, thickness 20 µm) was adhered to the APC polished surface. Then, as shown in Fig. 7, the APC polished surface of the ferrule was inserted in an adapter (trade name: SC-SC (plastic), produced by Sumitomo Electric Industries Co., Ltd.), and an optical termination connector of Example 2 was produced.

### Comparative Example 1

An optical transmission medium of Comparative Example 1 was produced in the same manner as Example 1, except that the APC cut surface was changed to a flat cut surface.

### Comparative Example 2

An optical termination connector of Comparative Example 2 was produced in the same manner as Example 2, except that the refractive index matching member in a sheet-shape was not used.

Main conditions of the Examples and the Comparative Examples are shown in Table 1.

**Table 1**

| | Features | APC cut surface APC polished surface | Refractive index matching member | Refractive index of refractive index matching member |
|---|---|---|---|---|
| Example 1 | Optical transmission medium | Existence | Existence | 1.45 |
| Example 2 | Optical terminal connector | Existence | Existence | 1.45 |
| Comparative Example 1 | Optical transmission medium | Nothing | Existence | 1.45 |
| Comparative Example 2 | Optical terminal connector | Existence | Nothing | - |

### Evaluation Methods

### Optical Terminal Function

With respect to the optical transmission media and the optical termination connectors of the Examples and the Comparative Examples, the connection surfaces thereof were connected with a back reflection meter (trade name: RM3 BACK REFLECTION METER, type: RM3750+IFA7, produced by JDS Uniphase Corporation), and light having a wavelength of 1310 nm was emitted, and return loss was calculated by reflected light. Specifically, a quartz based single-mode optical fiber which provides with an APC connector at one end thereof (an optical fiber 250 µm cable with an APC connector, length 1 m, produced by Sumitomo Electric Industries Co., Ltd.) was prepared, and the APC connector was connected at the end with the back reflection meter. Then, the other ends of the optical fibers were melted and connected with the optical transmission media of the Examples and the Comparative Examples, or the other ends of the optical fibers were connected with the optical termination connectors of the Examples and the Comparative Examples by way of a commercially available SC connector. Here, the measurement was carried out at 20 °C. As an evaluating standard, when the return loss was 60 dB or more, there was no problem in practical use.

### Optical Connector Function

### Standard Experiment A

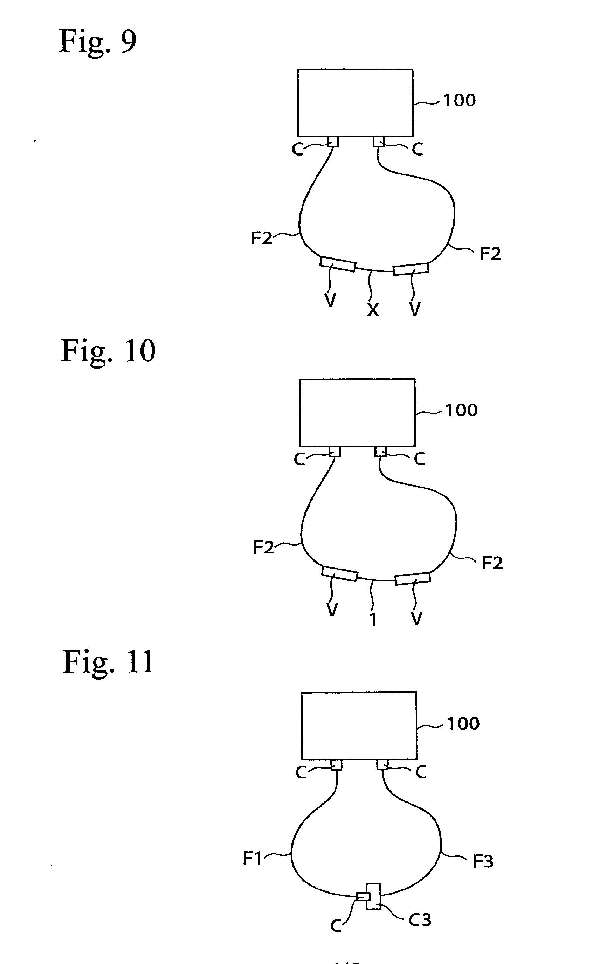

A standard experiment A was carried out in order to show a standard state in which connection loss was 0. Fig. 9 is a circuit diagram for the standard experiment A. Reference numeral 100 indicates an optical power meter (trade name: OPTICAL MULTI POWER METER Q8221, produced by ADVANTEST Corporation), reference letter C indicates a FC connector, reference letter F2 indicates a quartz based single-mode optical fiber which is provided with an FC connector at one end thereof (an optical fiber 250 µm cable with an FC connector, length 1 m, produced by Sumitomo Electric Industries Co., Ltd.), and reference letter X indicates an optical fiber for the standard experiment which cut both ends so as to form a flat surface (outer diameter 250 µm, clad outer diameter 125 µm, length 200 mm, refractive index 1.45). Here, in the optical power meter 100, a sensor unit (trade name: Q82208) and as a 1.55 µm LD unit (trade name: Q81212) were used.

First, two optical fibers F2 were prepared, and the FC connectors were connected with an incident terminal and an exit terminal of the optical power meter 100, respectively. Next, both ends of an optical fiber X were connected with the optical fiber F2 and a V-groove substrate (produced by Hataken Co., Ltd.), respectively. In this condition, light having a wavelength of 1550 nm was emitted 5 times from the incident terminal, and light power ejected from the exit terminal was measured. Then, a standard value A was obtained by averaging 5 measured values.

### Evaluations of Examples and Comparative Examples

Next, with respect to the optical transmission medium of Example 1, the connection loss was evaluated. Fig 10 is a circuit diagram for evaluation experiments. Light power was measured in the same manner as that of the standard value A, except that the optical transmission medium produced by the above method was used instead of the optical fiber X. Then, connection loss of Example 1 was obtained by differences between the average of 5 measured values and the standard value A. The optical transmission medium of Comparative Example 1 was also similarly evaluated.

### Standard Experiment B

A standard experiment B was carried out in order to show a standard state in which connection loss was 0. Fig. 11 is a circuit diagram for an evaluation experiment. Reference letter C3 indicates a female type FC connector, reference letter F1 indicates a quartz based single-mode optical fiber which is provided with FC connectors at both ends thereof (an optical fiber 250 µm cable, length 1 m, produced by Sumitomo Electric Industries Co., Ltd.), and reference letter F3 indicates a quartz based single-mode optical fiber which is provided with a male type FC connector at one end thereof and a female type FC connector at the other end thereof (an optical fiber 250 µm cable, length 1 m, produced by Sumitomo Electric Industries Co., Ltd.).

First, optical fibers F1 and F3 were prepared, and the FC connectors were connected with an incident terminal and an exit terminal of the optical power meter 100, respectively. Next, as shown in the figure, the male type FC connector C provided at the other end of the optical fiber F1 was connected with the female type FC connector C3 provided at the other end of the optical fiber F3. In this condition, light having a wavelength of 1550 nm was emitted 5 times from the incident terminal, and light power exiting from the exit terminal was measured. Then, a standard value B was obtained by averaging 5 measured values.

### Evaluations of Examples and Comparative Examples

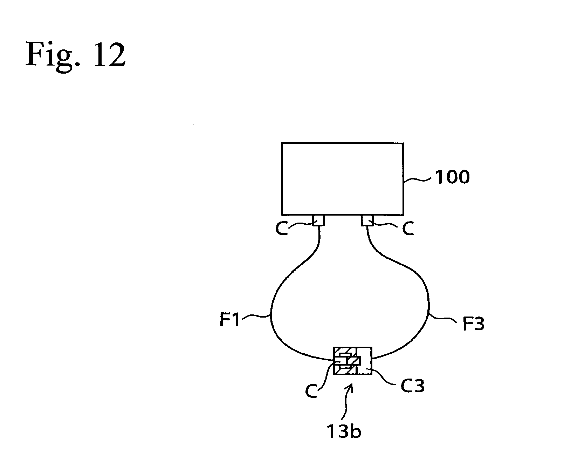

Next, with respect to the optical terminal connector of Example 2, the connection loss was evaluated. Fig 12 is a circuit diagram for evaluation experiments. As described in figure, the male type FC connector of the optical fiber F1 was connected with an APC polished surface of the optical terminal connector 13b, and the female type FC connector of the optical fiber F3 was connected with a connection surface of the optical terminal connector 13b. In this condition, light having a wavelength of 1550 nm was emitted 5 times from the incident terminal, and light power exiting from the exit terminal was measured. Then, connection loss of Example 2 was obtained by differences between the average of 5 measured values and the standard value B. The optical terminal connector of Comparative Example 2 was also similarly evaluated. As an evaluating standard, when the connection loss was less than 0.25 dB, there was no problem in practical use, and when it was less than 0.15 dB, the optical terminal connector was particularly superior.

**Table 2**

| | Return loss (dB) | Connection loss (dB) |
|---|---|---|
| Example 1 | 72.7 | 0.1 |
| Example 2 | 72.7 | 0.1 |
| Comparative Example 1 | 14.7 | 0.1 |
| Comparative Example 2 | 72.7 | 3.0 |

### Evaluated Results

As is clear from Table 2, in the optical transmission medium and the optical terminal connector of the Examples, the return loss was 72.7 dB, and the connection loss was 0.1 dB, and therefore, there was no problem in practical use. In contrast, in the optical transmission medium of the Comparative Example 1, the return loss was 14.7 dB, and there was a problem in practical use, and the optical terminal function was not obtained. In addition, in the optical terminal connector of the Comparative Example 2, the connection loss was 3.0 dB and there was a problem in practical use, and the optical connector function was not obtained. Here, with respect to the optical transmission medium of the Example 1 and the optical terminal connectors of the Example 2 and the Comparative Example 2, superior return loss which is 60 dB or more was exhibited, even if they were connected with another optical transmission medium or another optical connector.

## Claims

1. An optical transmission medium, wherein at least one end thereof is an Angled Physical Contact cut surface and a refractive index matching member is provided on the Angled Physical Contact cut surface.

2. A ferrule wherein the optical transmission medium according to claim 1 is held.

3. An optical terminal connector comprising a ferrule which holds an optical transmission medium and an adapter into which the ferrule is inserted from one end thereof, wherein at least one end of the optical transmission medium is an Angled Physical Contact cut surface and a refractive index matching member is provided on the Angled Physical Contact cut surface.

4. An optical terminal connector according to claim 3, wherein one end thereof is an Angled Physical Contact cut surface and the other end thereof is a flat cut surface or a Physical Contact cut surface.

5. An optical transmission medium according to claim 1, wherein the refractive index matching member has a type A durometer hardness by the Japanese Industrial Standard of 80 or less and a storage elastic modulus is at least 1 × 10³ MPa.

6. An optical transmission medium according to claim 1, wherein thickness of the refractive index matching member is 8 to 100 µm.

7. An optical structure being terminated by the Angled Physical Contact cut surface of the optical transmission medium according to claim 1.

8. An optical structure, wherein the Angled Physical Contact cut surface of the optical transmission medium according to claim 1 is connected with another optical transmission medium or an optical functional part.

9. An optical equipment comprising the optical transmission medium according to claim 1.

10. A ferrule, wherein at least one end thereof is an Angled Physical Contact polished surface and a refractive index matching member is provided on the Angled Physical Contact polished surface.

11. An optical terminal connector comprising a ferrule which holds an optical transmission medium and an adapter into which the ferrule is inserted from one end thereof, wherein at least one end of the ferrule is an Angled Physical Contact polished surface and a refractive index matching member is provided on the Angled Physical Contact polished surface.

12. An optical terminal connector according to claim 11, wherein one end thereof is an Angled Physical Contact polished surface and the other end thereof is a flat polished surface or a Physical Contact polished surface.
